# EUROPEAN PATENT APPLICATION

(11) **EP 4 575 814 A1**
(43) Date of publication of application: **25.06.2025**
(21) Application number: 24216254.3
(22) Date of filing: 28.11.2024
(51) Int. Cl.: G06F 13/10, G06F 13/24, G06F 13/42

(54) **NOTEBOOK COMPUTER AND OPERATION METHOD**

(30) Priority: 19.12.2023 TW 112149517
(71) Applicant: Acer Incorporated, New Taipei City 221 (TW)
(72) Inventor: WANG, Chien-Shan, 221 New Taipei City (TW)
(74) Representative: dompatent von Kreisler Selting Werner - Partnerschaft von Patent- und Rechtsanwälten mbB

(57) **Abstract**

A notebook computer and an operation method thereof are provided. The notebook computer includes a platform controller hub (PCH), an embedded controller (EC), a data wiring, a clock signal wiring and an interrupt signal wiring. The platform controller hub includes a first internal integrated circuit (I2C) controller and a general-purpose input/output (GPIO) controller. The embedded controller includes a second internal integrated circuit (I2C) controller. The data wiring is connected to the first I2C controller and the second I2C controller. The clock signal wiring is connected to the first I2C controller and the second I2C controller. The interrupt signal wiring is connected to the GPIO controller and the second I2C controller.

## Description

### BACKGROUND OF THE INVENTION

### Field of the Invention

The invention relates in general to an electronic device and an operation method thereof, and more particularly to a notebook computer and an operation method thereof.

### Description of the Related Art

The communication of a notebook computer from an application unit to an embedded controller (EC) requires windows management instrumentation (WMI). However, to satisfy the request of the application unit by designing a new WMI method, a large amount of work needs to be done between the application unit (AP), the basic input output system (BIOS), and the embedded controller (EC). Even the change is minor, the required development time would still be more than one month in most cases. Research personnel are trying to provide a better and simpler architecture with which software and firmware developers can implement required functions.

Another situation relates to a system management interrupt (SMI). The WMI normally executes tasks using an SMI. However, the SMI has safety and reliability problems. To resolve the safety and reliability problems, a new system architecture is needed to facilitate the communication between the application unit and the embedded controller (EC).

### SUMMARY OF THE INVENTION

The invention is directed to a notebook computer and an operation method thereof capable of providing a communication method without using WMI by declaring the embedded controller (EC) 120 as an I2C human interface device (I2C HID) through changes in system architecture. Thus, the development time of application task can be reduced and the safety and reliability problems can be resolved.

According to one embodiment of the present invention, a notebook computer is provided. The notebook computer includes a platform controller hub (PCH), an embedded controller (EC), a data wiring, a clock signal wiring and an interrupt signal wiring. The platform controller hub includes a first internal integrated circuit (I2C) controller and a general-purpose input/output controller (GPIO) controller. The embedded controller includes a second internal integrated circuit (I2C) controller. The data wiring is connected to the first I2C controller and the second I2C controller. The clock signal wiring is connected to the first I2C controller and the second I2C controller. The interrupt signal wiring is connected to the GPIO controller and the second I2C controller.

According to another embodiment of the present invention, an operation method of a notebook computer is provided. The operation method of a notebook computer includes the following steps. An embedded controller (EC) is declared as an I2C human interface device (I2C HID) by an advanced configuration and power interface (ACPI). A communication method between the embedded controller and an operating system is defined by the embedded controller.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1 is a communication method between an embedded controller and an application unit of a notebook computer according to an embodiment of the present disclosure.
FIG. 2 is a block diagram of a notebook computer according to an embodiment of the present disclosure.
FIG. 3 is a block diagram of a notebook computer according to another embodiment of the present disclosure.
FIG. 4 exemplarily illustrates a communication method between an embedded controller and an operating system according to an embodiment of the present disclosure.
FIG. 5 exemplarily illustrates a communication method between an embedded controller and an operating system according to another embodiment of the present disclosure.
FIG. 6 is a flowchart of an operation method of a notebook computer according to an embodiment of the present disclosure.

### DETAILED DESCRIPTION OF THE INVENTION

Technical terms are used in the specification with reference to the prior art used in the technology field. For any terms described or defined in the specification, the descriptions and definitions in the specification shall prevail. Each embodiment of the present disclosure has one or more technical features. Given that each embodiment is implementable, a person ordinarily skilled in the art can selectively implement or combine some or all of the technical features of any embodiment of the present disclosure.

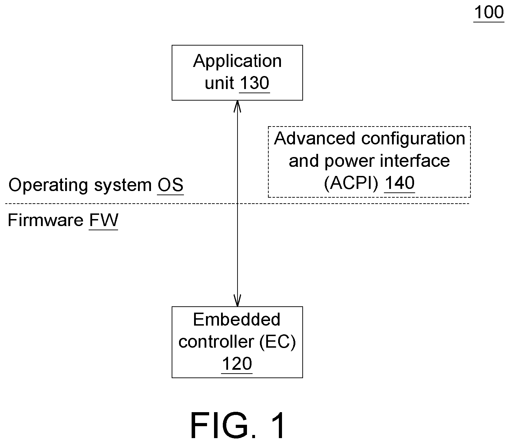

Referring to FIG. 1, a communication method between an embedded controller 120 and an application unit 130 of a notebook computer 100 according to an embodiment of the present disclosure is shown. The application unit 130 can be realized by such as a storage for storing programming codes. In the present embodiment, an advanced configuration and power interface (ACPI) 140, such as an open protocol, declares the embedded controller 120 as an I2C human interface device (I2C HID). The operating system can use the ACPI 140 to confirm and configure the hardware elements of a computer, execute power management (for instance, the not-in-use hardware elements enter a sleep mode), automatic configuration (for instance, plug-and-play and hot-plug), and status monitoring. The human interface device (HID) is a device that is used by the user to receive input or provide output.

The embedded controller 120 of the firmware FW can directly communicate with the application unit 130 of the operating system OS without using windows management instrumentation (WMI), hence avoiding the SMI creating operation problems. Thus, the development time of application task can be reduced, and the safety and reliability problems can be resolved.

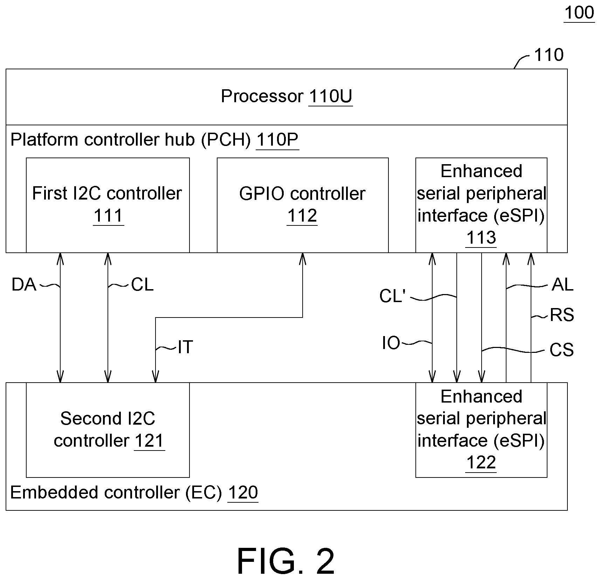

Referring to FIG. 2, a block diagram of a notebook computer 100 according to an embodiment of the present disclosure is shown. The notebook computer 100 at least includes a platform controller hub (PCH) 110P and the said embedded controller 120. The platform controller hub 110P includes a first internal integrated circuit (I2C) controller 111, a general-purpose input/output controller (GPIO) controller 112 and an enhanced serial peripheral interface (eSPI) 113. The embedded controller 120 includes a second internal integrated circuit (I2C) controller 121 and an enhanced serial peripheral interface (eSPI) 122. In the embodiment of FIG. 2, a processor 110U and the platform controller hub 110P are integrated in a system on chip (SoC) 110. The processor 110U can be realized by a central processing unit (CPU) and/or a graphic processing unit (GPU).

As indicated in FIG. 2, the notebook computer 100 further includes a data wiring DA, a clock signal wiring CL, an interrupt signal wiring IT, an input output signal wiring IO, a clock signal wiring CL', a choice signal wiring CS, an alert wiring AL and a realignment signal wiring RS. The data wiring DA, the clock signal wiring CL, the interrupt signal wiring IT, the input output signal wiring IO, the clock signal wiring CL', the choice signal wiring CS, the alert wiring AL and the realignment signal wiring RS are such as wires on the circuit board. These wires are connected between package chips. The data wiring DA is connected to the first I2C controller 111 and the second I2C controller 121. The clock signal wiring CL is connected to the first I2C controller 111 and the second I2C controller 121. The interrupt signal wiring IT is connected to the GPIO controller 112 and the second I2C controller 121. The input output signal wiring IO, the clock signal wiring CL', the choice signal wiring CS, the alert wiring AL and the realignment signal wiring RS are connected between the eSPI 113 and the eSPI 122.

In the present disclosure, the data wiring DA, the clock signal wiring CL, the interrupt signal wiring IT are particularly added between the platform controller hub 110P and the embedded controller 120 for enabling the embedded controller 120 to implement the operation of an I2C HID.

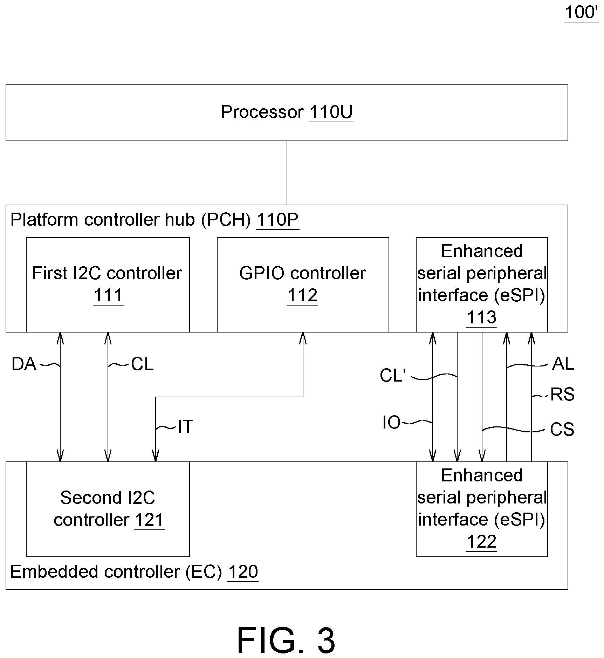

Referring to FIG. 3, a block diagram of a notebook computer 100' according to another embodiment of the present disclosure is shown. In the embodiment of FIG. 3, the processor 110U and the platform controller hub 110P are two independent chips. The architectures of the platform controller hub 110P and the embedded controller 120 of FIG. 3 are identical to that of FIG. 2, and the similarities are not repeated here.

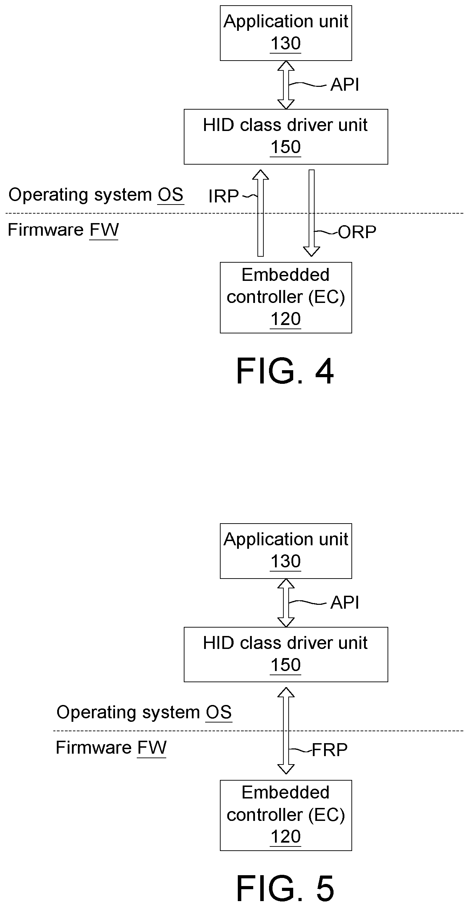

In the present disclosure, the embedded controller 120 is an I2C HID. Data can be transferred between the embedded controller (EC) 120 and the platform controller hub (PCH) 110P through the data wiring DA, the clock signal wiring CL and the interrupt signal wiring IT. There are two methods for transferring data between data wiring DA, the clock signal wiring CL and the interrupt signal wiring IT. The two methods are illustrated in FIG. 4 and FIG. 5, respectively.

Referring to FIG. 4, a communication method between an embedded controller 120 and an operating system OS according to an embodiment of the present disclosure is exemplarily illustrated. As indicated in FIG. 4, the embedded controller 120 communicates with the operating system OS using an input report IRP and an output report ORP. The input report IRP is used to upload data to the HID class driver unit 150, which communicates with the application unit 130 through the application interface API. The output report ORP is used to download data to the embedded controller 120. The input report IRP and the output report ORP have a one-way communication mode. Since the embedded controller 120 is declared as an I2C HID, the embedded controller 120 of the firmware FW can directly communicate with the HID class driver unit 150 of the operating system OS through the input report IRP and the output report ORP without using WMI, hence avoiding the SMI creating operation problems.

Referring to FIG. 5, a communication method between an embedded controller 120 and an operating system OS according to another embodiment of the present disclosure is exemplarily illustrated. As indicated in FIG. 5, the embedded controller 120 communicates with the operating system OS using a feature report FRP. The embedded controller 120 can upload data to the HID class driver unit 150 using a feature report FRP; the HID class driver unit 150 can communicate with the application unit 130 through the application interface API. The HID class driver unit can download data to the embedded controller 120 using a feature report FRP. The feature report FRP has a two-way communication mode. Since the embedded controller 120 is declared as an I2C HID, the embedded controller 120 of the firmware FW can directly communicate with the HID class driver unit 150 of the operating system OS through the input report IRP and the output report ORP without using WMI, hence avoiding the SMI creating operation problems.

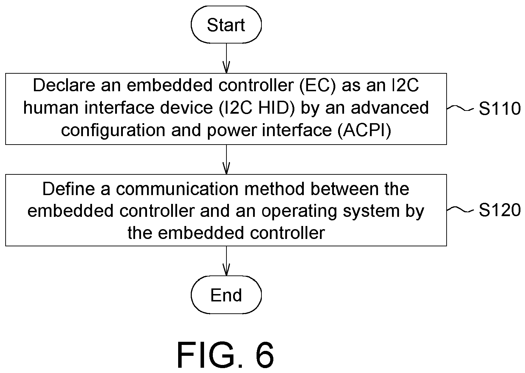

Referring to FIG. 6, a flowchart of an operation method of notebook computers 100 and 100' according to an embodiment of the present disclosure is shown. In the present disclosure, the operation method of the notebook computers 100 and 100' includes step S110 and S120. In step S110, an embedded controller (EC) 120 is declared as an I2C HID by an ACPI 140. Meanwhile, a data wiring DA, a clock signal wiring CL and an interrupt signal wiring IT need to be configured between the platform controller hub (PCH) 110P and the embedded controller (EC) 120.

Next, the method proceeds to step S120, a communication method between the embedded controller 120 and the operating system OS is defined by the embedded controller 120. For instance, the communication between the embedded controller 120 and the operating system OS can be performed using the input report IRP and the output report ORP of FIG. 4. Or, the communication between the embedded controller 120 and the operating system OS can be performed using the feature report FRP of FIG. 5.

According to the embodiments disclosed above, the notebook computers 100 and 100' and an operation method thereof are capable of providing a communication method without using WMI by declaring the embedded controller (EC) 120 as an I2C HID through changes in system architecture. After the embedded controller 120 is declared as an I2C HID, expansion design will be made easier, the lead time of development design and R&D resources can be saved, and outsourcing resources can be recognized more easily. In the communication method without using WMI, application tasks can be executed using a method that is robust and safer and incurs less system load (the number of processor pauses is greatly reduced).

Different features of some implementations or examples for implementing the present disclosure are disclosed above. Specific examples (such as numerals or designations disclosed above) are used in the descriptions of elements and configurations to simplify/illustrate some implementations of the present disclosure. These elements and configurations are exemplified for explanatory purpose only, not for limiting the scope of protection. Besides, some implementations of the present disclosure can repeat reference symbols and/or letters in various examples. The said repetition is for the purpose of simplicity and clarity only, not for specifying the relationship among various implementations and/or configurations.

While the invention has been described by way of example and in terms of the preferred embodiment(s), it is to be understood that the invention is not limited thereto. Based on the technical features embodiments of the present invention, a person ordinarily skilled in the art will be able to make various modifications and similar arrangements and procedures without breaching the spirit and scope of protection of the invention. Therefore, the scope of protection of the present invention should be accorded with what is defined in the appended claims.

## Claims

1. A notebook computer (100), **characterized in that** the notebook computer comprises:
a platform controller hub (PCH) (110P), comprising:
a first internal integrated circuit (I2C) controller (111); and
a general-purpose input/output controller (GPIO) controller (112);
an embedded controller (EC) (120), comprising:
a second internal integrated (I2C) circuit (121);
a data wiring (DA), connected to the first I2C controller (111) and the second I2C controller (121);
a clock signal wiring (CL), connected to the first I2C controller (111) and the second I2C controller (121); and
an interrupt signal wiring (IO), connected to the GPIO controller (112) and the second I2C controller (121).

2. The notebook computer according to claim 1, further comprising:
a processor, wherein the processor and the platform controller hub are integrated in a system on chip (SoC).

3. The notebook computer according to claim 1, further comprising:
a processor, connected to the platform controller hub, wherein the processor and the platform controller hub are two independent chips.

4. The notebook computer according to claim 1, wherein the embedded controller communicates with an operating system using a feature report.

5. The notebook computer according to claim 4, further comprising:
an HID class driver unit, wherein the embedded controller uploads data to the HID class driver unit using the feature report,
wherein the feature report has a two-way communication mode.

6. The notebook computer according to claim 1, wherein the embedded controller communicates with an operating system using an input report and an output report, wherein the input report and the output report have a one-way communication mode.

7. The notebook computer according to claim 1, wherein an advanced configuration and power interface (ACPI) declares the embedded controller as an I2C human interface device (I2C HID).

8. An operation method of a notebook computer (100), **characterized in that** the operation method comprises:
(S110) declaring an embedded controller (EC) (120) as an I2C human interface device (I2C HID) by an advanced configuration and power interface (ACPI) (140); and
(S120) defining a communication method between the embedded controller (120) and an operating system (OS) by the embedded controller (120).

9. The operation method of the notebook computer according to claim 8, wherein the embedded controller defines that the embedded controller communicates with the operating system using a feature report, and the embedded controller uploads data to an HID class driver unit using the feature report, where the feature report has a two-way communication mode.

10. The operation method of the notebook computer according to claim 8, wherein the embedded controller defines that the embedded controller communicates with the operating system using an input report and an output report, and the input report and the output report have a one-way communication mode.
